# EUROPEAN PATENT APPLICATION

(11) **EP 0 742 088 A1**
(43) Date of publication of application: **13.11.1996**
(21) Application number: 96201058.3
(22) Date of filing: 19.04.1996
(51) Int. Cl.: B29C 33/40, B29C 43/12

(54) **Vacuum bag**

(30) Priority: 10.05.1995 GB 9509505
(71) Applicant: Aerovac Systems (Keighley) Limited, Keighley, West Yorkshire BD20 5LN (GB)
(72) Inventor: Gibson, Howard, C/O Aerovac Systems (Keighley) Ltd, Keighley, West Yorkshire BD20 5LN (GB)
(74) Representative: Wharton, Peter Robert

(57) **Abstract**

A vacuum bag comprises a stretchable membrane adapted to be placed over an article to be moulded on a platen, the membrane having an outer periphery which has been chemically modified with an adhesion promoter. By this means, a vacuum bag of, for example, silicone rubber, can be sealed to the platen using a mastic sealant strip of the type which previously could only be used with the heat stabilised nylon film vacuum bag material. The preferred material from which the stretchable membrane of the invention is formed is a high strength silicone rubber.

## Description

This invention relates to an improved vacuum bag useful in the production of composite products by the vacuum bagging system.

Vacuum bagging is a term used to describe a method of producing pressure on various resin filled, carbon, glass, synthetic material and/or metal laminates (known as composites) while curing and consolidation takes place, usually by means of heating in a pressurised autoclave or oven or hydraulic press. The method may be used in the production of various composite parts useful in the aircraft and motor industries, as well as for the production of articles such as printed circuit boards for the electronics industry.

In the original form of the process, the composite to be cured is laid up on a mould base or platen and covered with a heat stabilised nylon film within which the vacuum is to be drawn. The nylon film is sealed to the platen around the edges thereof by using a sealant tape of mastic material, and the lay-up is then evacuated. The bagged composite is then placed in an oven or autoclave for curing. One of the problems with using this form of material as a vacuum bag is that, particularly when the composites have complex shapes, the flat film needs to be folded, pleated and so forth in order to accommodate the shape of the composite. Great care has to be taken in doing this so that areas of the film are not left unsupported when pulling the vacuum which can lead to bag bursts and the like.

EP-A-0175510 describes a vacuum bagging apparatus which comprises a stretchable membrane or vacuum bag, usually of a silicone rubber material, held within a rigid framework which is hollow and forms a vacuum manifold supplying vacuum to a seal affixed to a membrane and carried on the framework by one or more passages communicating with a cavity. The resilient seal defines the cavity within which a vacuum can be drawn when the framework and membrane are placed on a mould base or platen. An advantage of using a silicone rubber stretchable membrane is that the shape of the membrane can be moulded to conform with that of the composite and this helps achieve uniform pressure on the composite during its curing and prevents the problems hitherto associated with nylon film. However, for certain purposes, the use of the rigid framework to hold the silicone rubber membrane is inconvenient, especially where autoclave size is restricted. However, the physical properties of the silicone rubber membrane, in particular the release properties of silicone rubber, do not allow it to be affixed to a platen with a sealing strip in the same way as with the previously used nylon film.

The invention seeks to provide a vacuum bag improved in the above respects.

According to the present invention there is provided a vacuum bag comprising a stretchable membrane adapted to be placed over an article to be moulded on a platen, the membrane having an outer periphery which has been chemically modified with an adhesion promoter.

By this means, a vacuum bag of, for example, silicone rubber, can be sealed to the platen using a mastic sealant strip of the type which previously could only be used with the heat stabilised nylon film vacuum bag material.

The preferred material from which the stretchable membrane of the invention is formed is, as mentioned above, a high strength silicone rubber. This may typically comprise a polymer matrix of methyl vinyl polysiloxane. The polymer matrix may also include some or all of the following additional components.
a) 1 to 30 parts of small particle sized fumed silica filler;
b) 1 to 5 parts of a heat stabiliser (such as a rare earth octoate, barium oxide, red iron oxide, etc.);
c) a metallic oxide as an acid accepter;
d) process aids such as teflon powder, low molecular weight silicone polymer, and the like;
e) heat stable colorants or pigments; and
f) an organic peroxide curative or hindered silanol groups with platinum catalysts.

While it is only the periphery or flange area of the membrane which needs to be modified in accordance with the invention, the whole of the bag can be so modified if desired. The modified silicone rubber material contains an adhesion promoter which can, inter alia, include one or more of the following products:
a) a reactive silane;
b) a poly-functional co-agent such as trimethylolpropane trimethacrylate;
c) a zinc diacrylate metallic co-agent.

The use of the adhesion promoter within the rubber at least in the area of the periphery of the bag enables a conventional mastic sealant strip to be used with a silicone rubber stretchable membrane which has been shaped in conformity with the composite product to be moulded. In this way, the advantages of the shaped stretchable membrane of the apparatus of, for example, EP-A-0175510, are achieved without the necessity for the rigid framework, which saves space both in autoclaving and in subsequent storage.

## Claims

1. A vacuum bag comprising a stretchable membrane adapted to be placed over an article to be moulded on a platen, the membrane having an outer periphery which has been chemically modified with an adhesion promoter.

2. A bag as claimed in claim 1 which is formed from a high strength silicone rubber.

3. A bag as claimed in claim 2 in which the silicone rubber comprises a polymer matrix of methyl vinyl polysiloxane.

4. A bag as claimed in claim 3 in which the polymer matrix also includes some or all of the following additional components:
a) 1 to 30 parts of small particle sized fumed silica filler;
b) 1 to 5 parts of a heat stabiliser (such as a rare earth octoate, barium oxide, red iron oxide, etc.);
c) a metallic oxide as an acid accepter;
d) process aids such as teflon powder, low molecular weight silicone polymer, and the like;
e) heat stable colorants or pigments; and
f) an organic peroxide curative or hindered silanol groups with platinum catalysts.

5. A bag as claimed in any of claims 1 to 4 in which the whole of the bag is so modified.

6. A bag as claimed in any of claims 1 to 6 in which the adhesion promoter includes one or more of the following products:
a) a reactive silane;
b) a poly-functional co-agent such as trimethylolpropane trimethacrylate;
c) a zinc diacrylate metallic co-agent.
